# EUROPÄISCHE PATENTSCHRIFT

(11) **EP 1 194 387 B1**
(45) Veröffentlichungstag und Bekanntmachung des Hinweises auf die Patenterteilung: **07.04.2004**
(21) Anmeldenummer: 01933453.1
(22) Anmeldetag: 17.05.2001
(51) Int. Cl.: C04B 5/00, B01J 2/04

(54) **EINRICHTUNG UND VERFAHREN ZUM ZERSTÄUBEN UND ZERKLEINERN VON FLÜSSIGEN SCHMELZEN**
DEVICE AND METHOD FOR ATOMIZING AND COMMINUTING LIQUID MELTS
DISPOSITIF ET PROCEDE PERMETTANT LA PULVERISATION ET LE FRACTIONNEMENT DE MATIERES EN FUSION LIQUIDES

(30) Priorität: 19.05.2000 AT 8782000
(43) Veröffentlichungstag der Anmeldung: 10.04.2002
(73) Patentinhaber: Tribovent Verfahrensentwicklung GmbH, 6700 Lorüns (AT)
(72) Erfinder: EDLINGER, Alfred, A-6780 Bartholomäberg (AT)
(74) Vertreter: Haffner, Thomas M., Dr.
(86) Internationale Anmeldenummer: PCT/AT2001/000150
(87) Internationale Veröffentlichungsnummer: WO 2001/090018

(56) Entgegenhaltungen:
- EP-A- 0 468 269
- DE-A- 3 311 343
- DE-A- 3 730 147
- DE-A- 4 327 124

## Beschreibung

Die Erfindung bezieht sich auf eine Einrichtung zum Zerstäuben und Zerkleinern von flüssigen Schmelzen mit einem Schlackentundish, an dessen Auslauf eine Expansions- bzw. Kühlkammer angeschlossen ist, bei welcher in den Auslauf eine Treibgaslanze mündet, welche von einem rohrförmigen in die flüssige Schmelze eintauchenden Unterlaufwehr umgeben ist.

Einrichtungen der eingangs genannten Art, wie sie beispielsweise aus der WO 00/32306 bekannt sind, können zum Zerstäuben und Granulieren von Schlacken eingesetzt werden, wobei eine möglichst geringe Tröpfchengröße realisiert werden soll, um eine rasche Abkühlung und damit ein Verglasen der Schlacken zu bewirken und gleichzeitig erstarrtes Material in einer Feinheit zu erzielen, welche ein nachfolgendes Mahlen entbehrlich macht. Dies gilt insbesondere dann, wenn Schlackenschmelzen zerkleinert und verglast werden sollen, welche in der Folge aufgrund ihrer latenthydraulischen Eigenschaft als Zementersatz oder Zumischstoff zu Zementmischungen eingesetzt werden können. Das rohrförmige in die flüssige Schmelze eintauchende Unterlaufwehr kann hiebei höhenverstellbar angeordnet sein, um eine bestimmte Schichtdicke im Bereich des Auslaufes zu erzielen, wobei weiters die Treibgaslanze selbst höhenverstellbar gelagert sein kann, um eine jeweils optimale Positionierung für das Ausstoßen der flüssigen Schmelzen als Mantel des Treibgasstrahles einstellen zu können.

Die Erfindung zielt nun darauf ab, ausgehend von einer derartigen Anordnung bzw. einer derartigen Einrichtung eine Konstruktion zu schaffen, bei der die gewünschte Teilchengröße wesentlich herabgesetzt werden kann und gleichzeitig die Homogenität der Korngrößen verbessert werden kann. Insbesondere zielt die Erfindung darauf ab, die Strömungsverhältnisse im Auslaufbereich dahingehend zu verbessern, daß ein Flattern des Filmes, ein Spritzen oder ein instabiles Verhalten der Schmelze verhindert wird und, daß zusätzliche Scherspannungen in den Schlackentröpfchen induziert werden können, wodurch die Zerkleinerung weiter verbessert wird. Zur Lösung dieser Aufgabe besteht die erfindungsgemäße Einrichtung im wesentlichen darin, daß die Breite des Spaltes zwischen der Unterkante des Unterlaufwehrs und dem Tundishboden geringer als 20 %, vorzugsweise geringer als 15 %, der lichten Weite des Auslaufes ist, daß der Boden des Tundish im Bereich zwischen der Unterkante des Überlaufwehrs und dem Auslauf trichterförmig ausgebildet ist und daß die Treibgaslanze für den Einsatz von überkritischem Dampf zur Ausbildung eines unterexpandierten Freistrahles im Inneren des Schmelzestrahles ausgebildet ist. Dadurch wird die Voraussetzung geschaffen, über die Treibgaslanze überkritischen Dampf zur Ausbildung eines unterexpandierten Freistrahles im Inneren des Schmelzestrahles einzustossen, wodurch sich besonders kritische Strömungsverhältnisse ergeben und es zu einem Austritt des Treibgasstromes kommt, welcher im wesentlichen gleich der Schallgeschwindigkeit ist. Mit Rücksicht auf die Verwendung von überkritischem Dampf und den Umstand, daß auf diese Weise ein unterexpandierter Strahl ausgestossen wird, kommt es in der Folge zu Druckstössen im Bereich der Mach'schen Knoten, wobei zwischen derartigen Mach'schen Knoten Expansionsvolumina liegen. Durch Schwingunginterferenzen im Zweiphasenstrahl werden Scherbeanspruchungen in die Schlackentröpfchen eingeleitet, wobei die Frequenz bei zunehmend überkritischen Bedingungen entsprechend erhöht wird, wodurch sich der Abstand der Mach'schen Knoten in Achsrichtung des Treibgasstrahles entsprechend verringert. Der Umstand, daß bei überkritischen Bedingungen ein unterexpandierter Strahl ausgestossen wird, führt zu einer unmittelbaren Expansion nach dem Austritt aus der Düse, wobei die Geschwindigkeit in diesem Falle an der Düsenmündung genau der Schallgeschwindigkeit entspricht, sofern der Vordruck in der Düse mindestens überkritisch höher liegt, als der Druck unmittelbar nach dem Austritt aus der Düse. Dadurch, daß nun die Breite des Spaltes zwischen der Unterkante des Unterlaufwehrs und dem Tundishboden geringer als 20 % und vorzugsweise geringer als 15 % der lichten Weite des Auslaufes gewählt ist, wird sichergestellt, daß ein hinreichender zentraler Freiraum im abfließenden Strahl erzielt wird, welcher eine entsprechende Absenkung der Treibgaslanze bis nahe an oder in die Auslauföffnung ermöglicht. Dies ist insbesondere deshalb von Bedeutung, weil mit Rücksicht auf die speziellen Strömungsbedingungen im Falle eines überkritischen Dampfes bzw. eines unterexpandierten Freistrahles die Schmelzendüse im Bereich des Auslaufes des Tundish einer hohen mechanischen Beanspruchung unterliegt, sofern die Mach'schen Schwingungsknoten nicht hinreichend in Abstand von der Auslaufmündung auftreten. Es soll somit sichergestellt werden, daß im Bereich der Mündung selbst noch keine Mach'schen Knoten auftreten, um einen übermäßigen Verschleiß durch Erosions- bzw. Kavitationserscheinungen im Bereich des Schlacken- bzw. Schmelzenauslaufes zu verhindern. Dadurch, daß nun der Boden des Tundish im Bereich zwischen der Unterkante des Unterlaufwehrs und dem Auslauf trichterförmig ausgebildet ist, wird sichergestellt, daß aufgrund der jeweiligen Viskosität der Schmelze eine Ausbildung von Ringwülsten verhindert wird, sodaß ein Ablösen der Strömung kurz nach dem Eintritt in den Bodenauslauf verhindert wird und Flattern des Filmes sowie gegebenenfalls Spritzen und instabiles Verhalten der Schmelze vermieden werden kann. Im Optimalfall ist die Neigung des Trichters so bemessen, daß die durch den Abstand der Unterkante des Unterlaufwehrs vom Boden des Tundish definierte Schichtdicke bis zum Rand des Auslaufes weitestgehend erhalten bleibt, oder aber abnimmt.

Erfindungsgemäß wird bei Einhaltung überkritischer Bedingungen für den Dampf innerhalb der Treibgaslanze und beim Ausstoß eines unterexpandierten Freistrahles so gearbeitet, daß die Strömungsgeschwindigkeit an der Düsenmündung der Lanze exakt der Schallgeschwindigkeit entspricht.

Um die Ausbildung eines Wulstes, wie oben erwähnt, im Bereich des Schlackenauslaufes mit Sicherheit zu verhindern, ist mit Vorteil die Ausbildung so getroffen, daß der Neigungswinkel α des trichterförmigen Tundishbodenbereiches kleiner als 30°, vorzugsweise etwa 20°, zur Querschnittsebene des Auslaufes gewählt ist.

Prinzipiell ist es vorteilhaft den Tundish und die im Tundish vorrätige Schmelze bzw. Schlacke zu beheizen, wobei mit vorteil eine induktive Beheizung vorgesehen ist. Mit besonderem Vorteil ist im Rahmen der Erfindung die Ausbildung so getroffen, daß der Tundish Heizelemente zur Beheizung mit Mittelfrequenzstrom aufweist und daß zumindest das Unterlaufwehr aus elektrisch leitendem Werkstoff, wie z.B. C, SiC oder ZrO₂ bzw. ZrO₂ · MgO, ausgebildet ist, wobei gegenüber der Verwendung von Hochfrequenzheizungen, bei welchen aufgrund des Skineffektes lediglich der Außenbereich des Schlackentundish entsprechend beheizbar wird, durch die Verwendung eines Mittelfrequenzstromes auch das Unterlaufwehr beheizt werden kann, wenn dieses aus elektrisch leitendem Werkstoff besteht. Mit Vorteil ist die Ausbildung so getroffen, daß der Auslaufbereich des Tundish aus SiC, Al₂O₃ oder ZrO₂ bzw. ZrO₂ · MgO ausgebildet ist, wobei vorzugsweise der Tundish aus Graphit oder SiC ausgebildet ist. Auf diese Weise gelingt bei Verwendung eines Mittelfrequenzstromes die entsprechende Beheizung an kritischen Stellen sicherzustellen und die entsprechende Wärmeübertragung auf das Schmelzbad zur Feintemperatureinstellung sowie zum Aufschmelzen eventuell mitgerissener Feststoffpartikel einzusetzen.

Mit Vorteil ist erfindungsgemäß die Ausbildung so getroffen, daß die Treibgaslanze für Treibdampf mit Temperaturen zwischen 600° und 1250° C in einem Druckbereich zwischen 2 und 5 bar ausgelegt ist.

Aufgrund des Ausstosses eines unterexpandierten Freistrahles hat ein derartiger Freistrahl notwendigerweise eine gewisse Divergenz. Die Divergenz ist mit Rücksicht auf die überkritischen Ausstoßbedingungen allerdings als äußerst gering anzunehmen und es handelt sich genaugenommen im wesentlichen um einen Freistrahl mit zylindrischer Umhüllenden mit relativ geringer Divergenz. Eine derartige Strahlgeometrie mit relativ geringer Divergenz hat hiebei den vorteil, daß die Düsenmündung der Lanze in größerem Abstand (S) von der Auslauföffnung gehalten werden kann, ohne daß hiebei der Verschleiß im Bereich des Auslaufes wesentlich zunimmt. Besonders günstige Bedingungen in bezug auf den Verschleiß eines gegebenenfalls als gesonderter Einsatzteil ausgebildeten Schlackenauslaufes lassen sich hiebei mit Vorteil dadurch erzielen, daß der Schlackenauslauf des Tundish im Anschluß an den trichterförmigen Einlauf über eine axiale Länge hohlkonisch oder zylindrisch ausgebildet ist, welche dem 0,6 bis 1,1 fachen des lichten Durchmessers der Auslauföffnung entspricht, wobei sich mit Vorteil die Auslauföffnung im Anschluß an den hohlkonischen bzw. zylindrischen Bereich konisch erweitert.

Um die rheologischen Eigenschaften von Schlacken, insbesondere beispielsweise von typischen Hochofenschlacken, zu optimieren, hat sich die Zugabe von Flußmitteln, wie z.B. Flußspat (CaF₂), als äußerst vorteilhaft herausgestellt. Die dynamische Viskosität einer Hochofenschlacke mit einem CaO zu SiO₂-Verhältnis von etwa 1 und einem Al₂O₃-Gehalt von etwa 9 Gew.% bei 1480° C läßt sich auf diese Weise durch Zugabe von beispielsweise 1,2 Gew.% CaF₂ halbieren, wodurch sowohl das Feuerfestmaterial geschont wird als auch eine höhere Tröpfchenzerkleinerung erzielt werden kann. Gleichzeitig wird eine Erhöhung der Frühfestigkeit von unter Verwendung derartiger zerkleinerter Produkte hergestellten Mischzementen beobachtet.

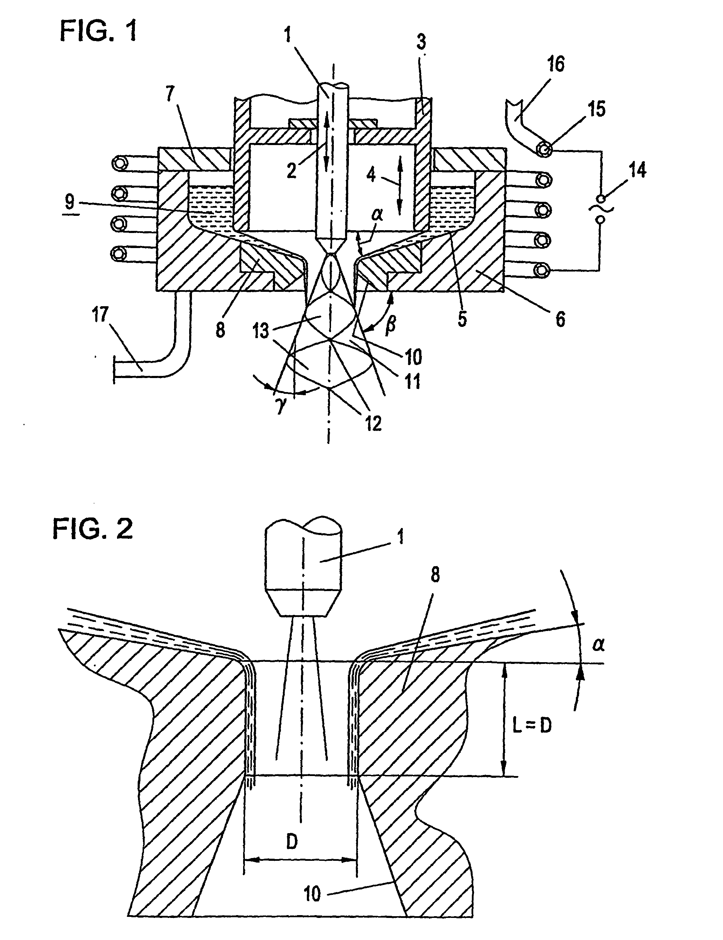

Die Erfindung wird nachfolgend anhand eines in der Zeichnung schematisch dargestellten Ausführungsbeispieles der erfindungsgemäßen Einrichtung näher erläutert. In dieser zeigen Fig. 1 einen Schnitt durch den Tundish im Bereich des Schlackenauslaufes und Fig. 2 eine vergrößerte Detaildarstellung eines modifizierten Schlackenauslaufes.

In Fig. 1 ist mit 1 eine Treibdampf-Gaslanze mit einer Austrittsdüse bezeichnet, welche in Richtung des Doppelpfeiles 2 höhenverstellbar gelagert ist. Die Treibdampf-Gaslanze wird konzentrisch von einem rohrförmigen Wehr 3 umgeben, welches aus elektrisch leitfähigem Material ausgebildet ist. Auch dieses rohrförmige Wehr 3 ist in Richtung des Doppelpfeiles 4 höhenverstellbar, um eine entsprechende Distanz der Unterkante des rohrförmigen Unterlaufwehrs zum Boden 5 eines Tundish 6 zu gewährleisten. Der Tundish 6 ist mit einem Deckel 7 verschließbar und weist einen Auslauf 8 auf, dessen der Schmelze 9 zugewandte Flächen trichterförmig ausgebildet sind. Der Neigungswinkel α beträgt hierbei im wesentlichen 20°, um sicherzustellen, daß bei gegebener Schlackenviskosität eine laminare Strömung der Schlacke im Auslaufbereich gewährleistet ist. Der Schlackenauslauf 8 ist als gesonderter Einsatzteil ausgebildet und an seiner dem Schlackenraum abgewandten Außenseite 10 sich trichterförmig erweiternd ausgebildet, wobei der Konizitätswinkel β dieser trichterförmigen Erweiterung größer oder gleich dem in der Zeichnung übertrieben dargestellten Divergenzwinkel γ des Freistrahles 11 gewählt ist. Das Treibgas bzw. Treibdampfgasgemisch tritt aus der Lanze 1 in einer Weise aus, daß ein unterexpandierter Strahl vorliegt, wodurch es zur Ausbildung von Mach'schen Schwingungsknoten 12 zwischen Expansionsvolumina 13 kommt. Der Freistrahl kollidiert nach dem Austritt aus der Lanze 1 mit dem flüssigen Schlackenmantel, wobei es zu induzierten Scherspannungen und damit zu einer weiteren Tröpfchenzerkleinerung kommt.

Der Schlackentundish ist mit Mittelfrequenzstrom beheizt, wobei die Stromquelle mit 14 und die entsprechende Spule mit 15 bezeichnet ist. Die Spule selbst kann mit Kühlwasser, welches über eine Leitung 16 zugeführt wird, beheizt werden, sodaß über den Anschluß 17 erwärmtes Kühlwasser abgezogen werden kann. Da die induktive Beheizung mit Mittelfrequenzstrom vorgenommen wird, werden Skineffekte vermieden und es gelingt, das rohrförmige Unterlaufwehr 3 gleichfalls zu beheizen, wenn dieses aus elektrisch leitendem Werkstoff, wie beispielsweise Kohlenstoff, Siliziumkarbid oder Zirkon, besteht. Im Fall von Zirkon ist zu berücksichtigen, daß dieser Werkstoff gleichfalls bei Temperaturen von über 800° C die geforderte elektrische Leitfähigkeit aufweist.

Bei Einsatz eines Treibdampfes mit einem Druck in der Lanze von etwa 2,5 bar und einer Temperatur von etwa 800° C und damit überkritischen Bedingungen ergibt sich unmittelbar nach dem Austritt aus der Lanze bei einer Strömungsgeschwindigkeit, welche der Schallgeschwindigkeit entspricht, eine rasche Expansion und damit auch eine rasche Abkühlung auf Temperaturen im Bereich von 650° C. Wenn Treibdampf mit einer Temperatur von 600° C und einem Druck von etwa 2,5 bar eingesetzt wird, sinkt die Temperatur auf etwa 475° C, wobei auch hier der Ausstoß mit Schallgeschwindigkeit und auf diese Weise die entsprechenden Scherkräfte für eine effiziente Zerkleinerung der Schlackentröpfchen erzielt werden.

In Fig. 2 ist der Schlackenauslauf 8 vergrößert dargestellt. Wie bereits erwähnt, entspricht der in Fig. 1 dargestellte Divergenzwinkel γ nicht den tatsächlichen Verhältnissen bei einem überkritischen bzw. unterexpandierten Strahl, dessen Umhüllende nahezu zylindrische Form aufweist. Wie aus Fig. 2 ersichtlich, ist nun im Anschluß an die trichterförmige Ausbildung unter Einschluß eines Neigungswinkels α ein im wesentlichen hohlzylindrischer Bereich vorgesehen, dessen axiale Länge L im wesentlichen dem Durchmesser D der lichten Weite der Auslaßöffnung entspricht. Im Anschluß an diesen im wesentlichen hohlzylindrischen Bereich erweitert sich die Schlackenauslaßöffnung wiederum trichterförmig, wie das durch die konischen Wände 10 angedeutet ist.

## Patentansprüche

1. Einrichtung zum Zerstäuben und Zerkleinern von flüssigen Schmelzen mit einem Schlackentundish, an dessen Auslauf eine Expansions∼ bzw. Kühlkammer angeschlossen ist, bei welcher in den Auslauf eine Treibgaslanze mündet, welche von einem rohrförmigen in die flüssige Schmelze eintauchenden Unterlaufwehr umgeben ist, **dadurch gekennzeichnet, daß** die Breite des Spaltes zwischen der Unterkante des Unterlaufwehrs (3) und dem Tundishboden (5) geringer als 20 %, vorzugsweise geringer als 15 %, der lichten Weite (D) des Auslaufes (8) ist, daß der Boden (5) des Tundish (6) im Bereich zwischen der Unterkante des Überlaufwehrs (3) und dem Auslauf (8) trichterförmig ausgebildet ist und daß die Treibgaslanze (1) für den Einsatz von überkritischem Dampf zur Ausbildung eines unterexpandierten Freistrahles (11) im Inneren des Schmelzestrahles ausgebildet ist, wobei die Strömungsgeschwindigkeit an der Düsenmündung der Lanze (1) auf die Schallgeschwindigkeit eingestellt ist.

2. Einrichtung nach Anspruch 1, **dadurch gekennzeichnet, daß** der Neigungswinkel α des trichterförmigen Tundishbodenbereiches (5) kleiner als 30°, vorzugsweise etwa 20°, zur Querschnittsebene des Auslaufes (8) gewählt ist.

3. Einrichtung nach Anspruch 1 oder 2, **dadurch gekennzeichnet, daß** der Tundish (6) Heizelemente (15) zur Beheizung mit Mittelfrequenzstrom aufweist und daß zumindest das Unterlaufwehr (3) aus elektrisch leitendem werkstoff, wie z.B. C, SiC, ZrO₂ oder ZrO₂ · MgO, ausgebildet ist.

4. Einrichtung nach Anspruch 1, 2 oder 3, **dadurch gekennzeichnet, daß** der Auslaufbereich (8) des Tundish (6) aus SiC, Al₂O₃, ZrO₂ und/oder ZrO₂ · MgO ausgebildet ist.

5. Einrichtung nach einem der Ansprüche 1 bis 4, **dadurch gekennzeichnet, daß** der Tundish (6) aus Graphit oder SiC ausgebildet ist.

6. Einrichtung nach einem der Ansprüche 1 bis 5, **dadurch gekennzeichnet, daß** die Treibgaslanze (1) für Treibdampf mit Temperaturen zwischen 600° und 1250° C in einem Druckbereich zwischen 2 und 5 bar ausgelegt ist.

7. Einrichtung nach einem der Ansprüche 1 bis 6, **dadurch gekennzeichnet, daß** der Schlackenauslauf (8) des Tundish (6) im Anschluß an den trichterförmigen Einlauf über eine axiale Länge hohlkonisch oder zylindrisch ausgebildet ist, welche dem 0,6 bis 1,1 fachen des lichten Durchmessers (D) der Auslauföffnung (8) entspricht.

8. Einrichtung nach Anspruch 7, **dadurch gekennzeichnet, daß** sich die Auslauföffnung (8) im Anschluß an den hohlkonischen bzw. zylindrischen Bereich konisch erweitert.

9. Verfahren zum Zerstäuben und Zerkleinern von flüssigen Schmelzen unter Verwendung einer Einrichtung nach einem der Ansprüche 1 bis 8, **dadurch gekennzeichnet, daß** über die Treibgaslanze überkritischer Dampf zur Ausbildung eines unterexpandierten Freistrahles im Inneren des Schmelzestrahles eingestoßen wird, wobei die Strömungsgeschwindigkeit an der Düsenmündung der Lanze auf die Schallgeschwindigkeit eingestellt ist.

10. Verfahren nach Anspruch 9, **dadurch gekennzeichnet, daß** Treibdampf mit Temperaturen zwischen 600° und 1250° C in einem Druckbereich zwischen 2 und 5 bar eingesetzt wird.

11. Verfahren nach Anspruch 9 oder 10, **dadurch gekennzeichnet, daß** flüssigen Schlacken zur Verbesserung der rheologischen Eigenschaften Flußmittel, wie z.B. CaF₂, zugesetzt werden.

## Claims

1. A device for atomizing and comminuting liquid melts, including a slag tundish to whose outlet an expansion or cooling chamber is connected, in which a propellant gas lance opens into the outlet, which propellant gas lance is surrounded by a tubular underflow weir immersed in the liquid slag, **characterized in that** the width of the gap between the lower edge of the underflow weir (3) and the tundish bottom (5) is smaller than 20%, preferably smaller than 15%, of the clear width (D) of the outlet (8), that the bottom (5) of the tundish (6) in the region between the lower edge of the overflow weir (3) and the outlet (8) is designed in a funnel-shaped manner, and that the propellant gas lance (1) is configured for the use of supercritical vapor to form an underexpanded free jet (11) in the interior of the melt jet, the flow speed at the nozzle mouth of the lance (1) being adjusted to sonic speed.

2. A device according to claim 1, **characterized in that** the angle of inclination α of the funnel-shaped tundish bottom region (5) is chosen to be smaller than 30°, preferably approximately 20°, relative to the cross sectional plane of the outlet (8).

3. A device according to claim 1 or 2, **characterized in that** the tundish (6) comprises heating elements (15) to heat with medium-frequency current, and that at least the underflow weir (3) is made of an electrically conductive material such as, e.g., C, SiC, ZrO₂ or ZrO₂.MgO.

4. A device according to claim 1, 2 or 3, **characterized in that** the outlet region (8) of the tundish (6) is made of SiC, Al₂O₃, ZrO₂ and/or ZrO₂.MgO.

5. A device according to any one of claims 1 to 4, **characterized in that** the tundish (6) is made of graphite or SiC.

6. A device according to any one of claims 1 to 5, **characterized in that** the propellant gas lance (1) is designed for a propellant vapor having a temperature of between 600° and 1250°C at a pressure ranging between 2 and 5 bars.

7. A device according to any one of claims 1 to 6, **characterized in that** the slag outlet (8) of the tundish (6), following the funnel-shaped inlet, is designed to be hollow-conical or cylindrical over an axial length corresponding to 0.6 to 1.1 times the clear diameter (D) of the outlet (8).

8. A device according to claim 7, **characterized in that** the outlet (8) widens conically following the hollow-conical or cylindrical region.

9. A method for atomizing and comminuting liquid melts using a device according to any one of claims 1 to 8, **characterized in that** a supercritical vapor is injected through the propellant gas lance to form an underexpanded free jet in the interior of the melt jet with the flow speed at the nozzle mouth of the lance being adjusted to sonic speed.

10. A method according to claim 9, **characterized in that** a propellant vapor having a temperature of between 600° and 1250°C at a pressure ranging between 2 and 5 bars is used.

11. A method according to claim 9 or 10, **characterized in that** fluxes such as, e.g., CaF₂ are added to liquid slags to enhance their rheologic properties.

## Revendications

1. Appareil pour pulvériser et broyer des masses fondues liquides avec un avant-creuset de laitier, à la sortie duquel est raccordée une chambre d'expansion ou de refroidissement, sur laquelle une lance pour gaz propulseur débouche dans la sortie, laquelle lance est entourée par un déversoir de courant inférieur de forme tubulaire et plongeant dans la masse fondue liquide, **caractérisé en ce que** la largeur de la fente entre le bord inférieur du déversoir de courant inférieur (3) et le fond (5) de l'avant-creuset est inférieure à 20 %, de préférence inférieure à 15 %, de la largeur intérieure (D) de la sortie (8), **en ce que** le fond (5) de l'avant-creuset (6) dans la zone entre le bord inférieur du déversoir de courant inférieur (3) et la sortie (8) est conçu en forme d'entonnoir et **en ce que** la lance pour gaz propulseur (1) est conçue pour l'utilisation de vapeur surcritique pour la réalisation d'un jet libre (11) sous-expansé à l'intérieur du jet de masse fondue, la vitesse d'écoulement à l'orifice de buse de la lance (1) étant réglée sur la vitesse du son.

2. Appareil selon la revendication 1, **caractérisé en ce que** l'angle d'inclinaison α de la zone de fond (5) de l'avant-creuset en forme d'entonnoir est choisi inférieur à 30°, de préférence à environ 20°, par rapport au plan de la section transversale de la sortie (8).

3. Appareil selon la revendication 1 ou 2, **caractérisé en ce que** l'avant-creuset (6) présente des éléments de chauffage (15) pour le chauffage avec un courant à fréquence moyenne et **en ce qu'**au moins le déversoir de courant inférieur (3) est réalisé en un matériau électriquement conducteur, comme par exemple du C, SiC, ZrO₂ ou ZrO₂ · MgO.

4. Appareil selon la revendication 1, 2 ou 3, **caractérisé en ce que** la zone de sortie (8) de l'avant-creuset (6) est réalisée en SiC, Al₂O₃, ZrO₂ et/ou ZrO₂ · MgO

5. Appareil selon l'une des revendications 1 à 4, **caractérisé en ce que** l'avant-creuset (6) est réalisé en graphite ou en SiC.

6. Appareil selon l'une des revendications 1 à 5, **caractérisé en ce que** la lance pour gaz propulseur (1) est conçue pour de la vapeur motrice avec des températures comprises entre 600° et 1250°C dans une plage de pressions comprise entre 2 et 5 bars.

7. Appareil selon l'une des revendications 1 à 6, **caractérisé en ce que** la sortie de laitier (8) de l'avant-creuset (6) à la suite de l'entrée en forme d'entonnoir est réalisée en forme de cône creux ou de cylindre, sur une longueur axiale qui correspond à 0,6 jusqu'à 1,1 fois le diamètre intérieur (D) de l'ouverture de sortie (8).

8. Appareil selon la revendication 7, **caractérisé en ce que** l'ouverture de sortie (8) s'élargit en forme de cône à la suite de la zone en forme de cône creux ou de cylindre.

9. Procédé pour pulvériser et broyer des masses fondues liquides moyennant l'utilisation d'un appareil selon l'une des revendications 1 à 8, **caractérisé en ce que** de la vapeur surcritique est injectée par la lance pour gaz propulseur pour la réalisation d'un jet libre sous-expansé à l'intérieur du jet de masse fondue, la vitesse d'écoulement à l'orifice de buse de la lance étant réglée sur la vitesse du son.

10. Procédé selon la revendication 9, **caractérisé en ce que** de la vapeur motrice est utilisée avec des températures comprises entre 600° et 1250°C dans une plage de pressions comprise entre 2 et 5 bars.

11. Procédé selon la revendication 9 ou 10, **caractérisé en ce que** des fondants, comme par exemple du CaF₂, sont ajoutés à des laitiers liquides pour l'amélioration des propriétés rhéologiques.
